# EUROPEAN PATENT SPECIFICATION

(11) **EP 1 937 979 B1**
(45) Date of publication and mention of the grant of the patent: **23.06.2010**
(21) Application number: 06803831.4
(22) Date of filing: 19.09.2006
(51) Int. Cl.: F04D 29/16, F04D 29/28, F16J 15/447, F01D 11/02, F01D 1/22

(54) **CENTRIFUGAL COMPRESSOR INCLUDING A SEAL SYSTEM**
RADIALVERDICHTER MIT EINEM DICHTUNGSSYSTEM
COMPRESSEUR CENTRIFUGE COMPRENANT UN SYSTEME DE JOINTS

(30) Priority: 19.09.2005 US 718440 P
(43) Date of publication of application: 02.07.2008
(73) Proprietor: INGERSOLL-RAND COMPANY, Montvale, NJ 07645 (US)
(72) Inventor: MULLER, Michael, O., Charlotte, NC 28207 (US); ROBB, Jay, L., Rockwell, NC 28138 (US); MARIANI, Filippo, I-20124 Milan (IT)
(74) Representative: Every, David Aidan
(86) International application number: PCT/US2006/036416
(87) International publication number: WO 2007/035698

(56) References cited:
- EP-A1- 0 518 027
- CH-A- 138 087
- DE-A1- 4 125 763
- US-B1- 6 238 179

## Description

### BACKGROUND

The invention relates to an impeller for a centrifugal compressor. More particularly, the invention relates to an impeller for a centrifugal compressor that includes a sealing surface on a back portion.

Compression of a gas in centrifugal compressors, also known as dynamic compressors, is based on the transfer of energy from a set of rotating impeller blades to the gas. A conventional centrifugal gas compressor includes a stationary housing and an impeller within the housing which is rotatable about an axis. Gas, such as air is directed in a generally axial direction to leading edges of the impeller blades, and exits at trailing edges of the blades in a generally radial direction, typically into a diffuser and then a volute. The rotating blades impart energy by changing the momentum or velocity, and the pressure of the gas. The gas momentum, which is related to kinetic energy, is then converted into pressure energy by decreasing the velocity of the gas in the stationary diffuser and downstream collecting systems (e.g., the volute). The pressure of the gas at the trailing edges of the blades is increased compared to gas at the leading edges of the blades. Because centrifugal compressors include both stationary and rotating components, seals are required to contain the compressed gas discharged from the impeller.

Due to a non-symmetric stiffness of the impeller, mass-related body forces induced by rotation (e.g., centrifugal forces) impart to the impeller, a characteristic displacement directed toward the blade side of the impeller.

The net axial thrust acting on a shaft that includes one or more impellers can be absorbed by a thrust bearing having a load carrying capacity that generally depends on the bearing type, design, performance and cost. During operation of the impeller, different aerodynamically induced conditions may develop so that the direction of the net thrust may reverse, thus requiring an additional thrust bearing to maintain the rotor assembly in the proper axial position with respect to the surrounding stationary structures of the compressor.

CH 138 087 A (Escher Wyss Machf AG [CH]), which discloses all the features of the first part of claim 1, describes a centrifugal compressor comprising a rotary impeller having an extension defines a sealing portion which seals against a stationary seal ring.

DE 41 25 763 A1 (MAN B & W Diesel AG [DE]) describes a radial compressor impeller having blades and discs which are spaced from a housing cover by sealing ribs.

EP 0 518 027 A1 (Mitsubishi Heavy Ind Ltd [JP]) describes a centrifugal compressor in which a seal member is arranged annularly and multiplexly at the back of an impeller for sealing up a gap between the impeller and its housing.

### SUMMARY

In one embodiment, the invention provides a centrifugal compressor that includes an impeller that defines an outside diameter and is rotatable about an axis to provide a flow of compressed fluid. A portion of the compressed fluid passes around the outside diameter to define a leakage flow. An extension extends from the impeller and includes a first seal portion that has a plurality of steps in a leakage flow direction. A first of the plurality of steps has a first diameter with the diameter of each subsequent step being smaller than an adjacent upstream step. A stationary seal ring includes a second seal portion that has a plurality of teeth. Each tooth is disposed adjacent one of the plurality of steps to define a plurality of seal points that inhibit the passage of the leakage flow.

Other features and advantages of the invention will become apparent to those skilled in the art upon review of the following detailed description, claims, and drawings.

### BRIEF DESCRIPTION OF THE DRAWINGS

Fig. 1 is a cross section view of a fluid compression system embodying the invention and taken through an axis of rotation;
Fig. 2 is an enlarged cross section view of an impeller of the fluid compression system of Fig. 1;
Fig. 3 is a section view of a portion of the impeller of Fig. 2;
Fig. 4 is another section view of a portion of the impeller of Fig. 2;
Fig. 5 is a cross section of a stationary seal ring of Fig. 1 taken through an axis of rotation;
Fig. 6 is a cross section view of two teeth of the stationary seal ring of Fig. 5;
Fig. 7 is a cross section view of another stationary seal ring embodying the invention and including a flow path therethrough;
Fig. 8 is a section view of a portion of the centrifugal compressor of Fig. 2;
Fig. 9 is a section view of another portion of the centrifugal compressor of Fig. 2;
Fig. 10 is a schematic illustration of a pressure distribution for a prior art impeller; and
Fig. 11 is a schematic illustration of a pressure distribution for the impeller of Fig. 2.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The order of limitations specified in any method claims does not imply that the steps or acts set forth therein must be performed in that order, unless an order is explicitly set forth in the specification.

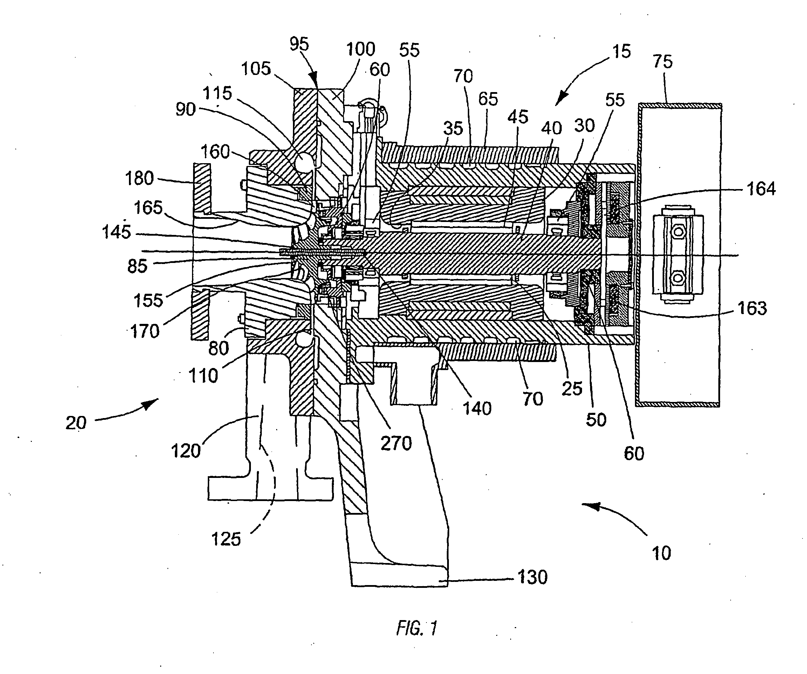

Fig. 1 illustrates a fluid compression system 10 that includes a prime mover, such as a motor 15 coupled to a compressor 20 and operable to produce a compressed fluid. In the illustrated construction, an electric motor 15 is employed as the prime mover. However, other constructions may employ other prime movers such as but not limited to internal combustion engines, diesel engines, combustion turbines, etc.

The electric motor 15 includes a rotor 25 and a stator 30 that defines a stator bore 35. The rotor 25 is supported for rotation on a shaft 40 and is positioned substantially within the stator bore 35. The illustrated rotor 25 includes permanent magnets 45 that interact with a magnetic field produced by the stator 30 to produce rotation of the rotor 25 and the shaft 40. The magnetic field of the stator 30 can be varied to vary the speed of rotation of the shaft 40. Of course, other constructions may employ other types of electric motors (e.g., synchronous, induction, brushed DC motors, etc.) if desired.

The motor 15 is positioned within a housing 50 which provides both support and protection for the motor 15. A bearing 55 is positioned on either end of the housing 50 and is directly or indirectly supported by the housing 50. The bearings 55 in turn support the shaft 40 for rotation. In the illustrated construction, magnetic bearings 55 are employed with other bearings (e.g., roller, ball, needle, etc.) also suitable for use. In the construction illustrated in Fig. 1, secondary bearings 60 are employed to provide shaft support in the event one or both of the magnetic bearings 55 fail.

In some constructions, an outer jacket 65 surrounds a portion of the housing 50 and defines cooling paths 70 therebetween. A liquid (e.g., glycol, refrigerant, etc.) or gas (e.g., air, carbon dioxide, etc.) coolant flows through the cooling paths 70 to cool the motor 15 during operation.

An electrical cabinet 75 may be positioned at one end of the housing 50 to enclose various items such as a motor controller, breakers, switches, and the like. The motor shaft 40 extends beyond the opposite end of the housing 50 to allow the shaft to be coupled to the compressor 20.

The compressor 20 includes an intake housing 80 or intake ring, an impeller 85, a diffuser 90, and a volute 95. The volute 95 includes a first portion 100 and a second portion 105. The first portion 100 attaches to the housing 50 to couple the stationary portion of the compressor 20 to the stationary portion of the motor 15. The second portion 105 attaches to the first portion 100 to define an inlet channel 110 and a collecting channel 115. The second portion 105 also defines a discharge portion 120 that includes a discharge channel 125 that is in fluid communication with the collecting channel 115 to discharge the compressed fluid from the compressor 20.

In the illustrated construction, the first portion 100 of the volute 95 includes a leg 130 that provides support for the compressor 20 and the motor 15. In other constructions, other components are used to support the compressor 20 and the motor 15 in the horizontal position. In still other constructions, one or more legs, or other means are employed to support the motor 15 and compressor 20 in a vertical orientation or any other desired orientation.

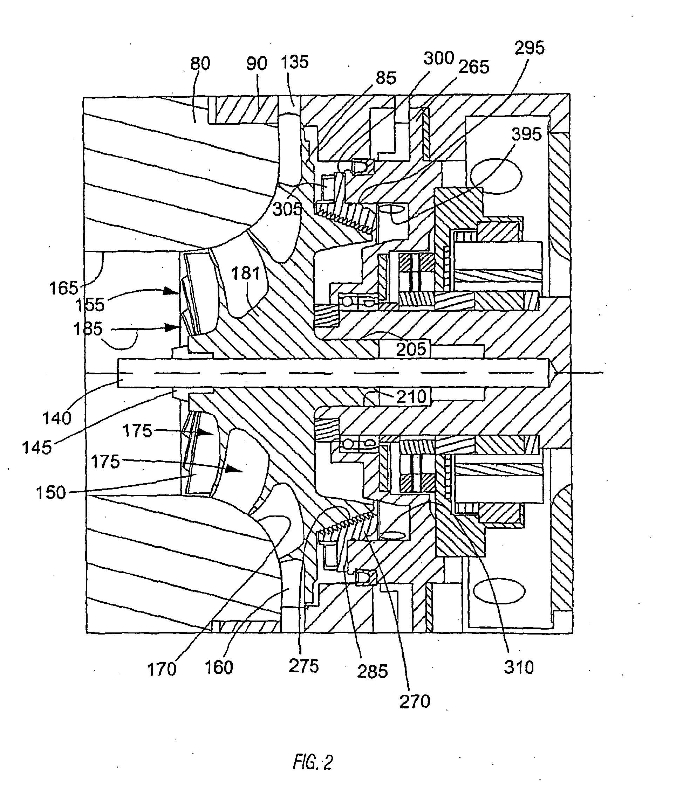

The diffuser 90 is positioned radially inward of the collecting channel 115 such that fluid flowing from the impeller 85 must pass through the diffuser 90 before entering the volute 95. The diffuser 90 includes aerodynamic surfaces 135 (e.g., blades, vanes, fins, etc.), shown in Fig. 2, arranged to reduce the flow velocity and increase the pressure of the fluid as it passes through the diffuser 90.

The impeller 85 is coupled to the rotor shaft 40 such that the impeller 85 rotates with the motor rotor 25. In the illustrated construction, a rod 140 threadably engages the shaft 40 and a nut 145 threadably engages the rod 140 to fixedly attach the impeller 85 to the shaft 40. The impeller 85 extends beyond the bearing 55 that supports the motor shaft 40 and, as such is supported in a cantilever fashion. Other constructions may employ other attachment schemes to attach the impeller 85 to the shaft 40 and other support schemes to support the impeller 85. As such, the invention should not be limited to the construction illustrated in Fig. 1. Furthermore, while the illustrated construction includes a motor 15 that is directly coupled to the impeller 85, other constructions may employ a speed increaser such as a gear box to allow the motor 15 to operate at a lower speed than the impeller 85.

The impeller 85 includes a plurality of aerodynamic surfaces or blades 150 that are arranged to define an inducer portion 155 and an exducer portion 160. The inducer portion 155 is positioned at a first end of the impeller 85 and is operable to draw fluid into the impeller 85 in a substantially axial direction. The blades 150 accelerate the fluid and direct it toward the exducer portion 160 located near the opposite end of the impeller 85. The fluid is discharged from the exducer portion 160 in at least partially radial directions that extend 360 degrees around the impeller 85.

The impeller 85 cooperates with a stationary seal ring 270 to define a seal. The seal is positioned to reduce the axial force applied to the back face of the impeller 85, thereby reducing the overall axial thrust toward the blades 150. The thrust is reduced to a level that allows for the use of an active magnetic thrust bearing 163 rather than a more conventional thrust bearing. The magnetic thrust bearing 163 includes a thrust disc 164 having a reduced diameter as compared to that which would be necessary absent the aforementioned seal system.

The intake housing 80; sometimes referred to as the intake ring, is connected to the volute 95 and includes a flow passage 165 that leads to the impeller 85. Fluid to be compressed is drawn by the impeller 85 down the flow passage 165 and into the inducer portion 155 of the impeller 85. The flow passage 165 includes an impeller interface portion 170 that is positioned near the blades 150 of the impeller 85 to reduce leakage of fluid over the top of the blades 150. Thus, the impeller 85 and the intake housing 80 cooperate to define a plurality of substantially closed flow passages 175.

In the illustrated construction, the intake housing 80 also includes a flange 180 that facilitates the attachment of a pipe or other flow conducting or holding component. For example, a filter assembly could be connected to the flange 180 and employed to filter the fluid to be compressed before it is directed to the impeller 85. A pipe would lead from the filter assembly to the flange 180 to substantially seal the system after the filter and inhibit the entry of unwanted fluids or contaminates.

Turning to Fig. 2; the impeller 85 is illustrated in greater detail. The impeller 85 includes a hub 181 or body having a front side 182 from which the blades extend and a back side 184 opposite the front side 182. The inducer portion 155 is substantially annular and draws fluid along an intake path 185 into the impeller 85. The fluid enters in a substantially axial direction and flows through the passages 175 defined between adjacent blades 150 to the exducer portion 160. The outlet of the exducer portion 160 defining an outside diameter 190 of the impeller 85.

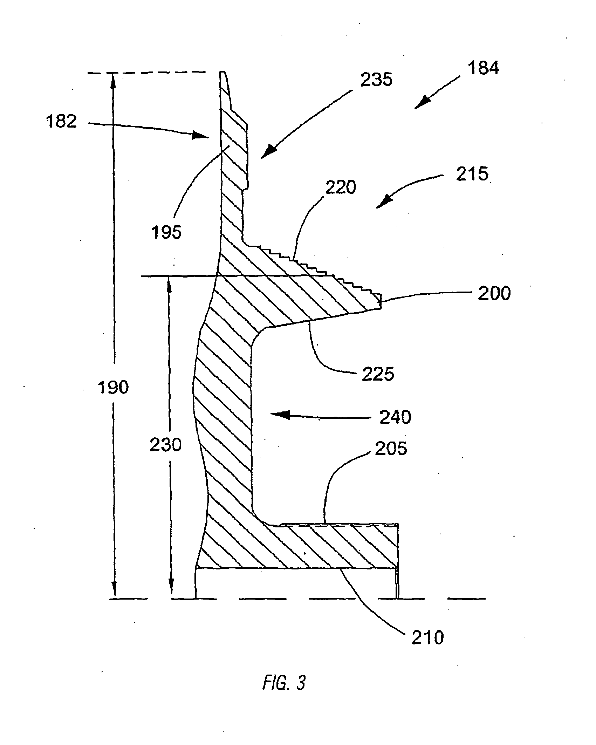

Fig. 3 illustrates the back side 184 of the impeller 85 as including a balancing ring 195, an extension 200, and an alignment portion 205. The alignment portion 205 is sized to fit at least partially within a bore 210 formed as part of the shaft 40. This provides support for the impeller 85 to inhibit mis-alignment between the shaft 40 and the impeller 85 that can produce undesirable vibrations. In some constructions, the shaft bore 210 and the alignment portion 205 includes alignment features (e.g., splines) that aid in providing the desired alignment.

The balancing ring 195 provides additional material on the back side 184 of the impeller 85 for use during balancing. Material can be removed from the balance ring 195 at select radial and angular positions to statically and dynamically balance the impeller 85 as required for the particular application. Of course, other constructions position the balance ring 195 differently or omit the balance ring 195 completely.

The extension 200 extends from the back side 184 in a generally axial direction away from the blades 150. The extension 200 includes a first seal portion 215 that includes a plurality of seal surfaces 220, and an inner surface 225 that, in some constructions, may include another plurality of seal surfaces. The first seal portion 215 defines an average radial diameter 230 that, in preferred constructions is greater than about 50 percent of the outermost diameter 190 of the impeller 85. The position of the extension 200 divides the back side 184 of the impeller 85 into a first annular 235 area disposed radially outside of the extension 200 and extending to the outermost diameter 190 of the impeller 85, and a second annular area 240 disposed radially inside of the extension 200 and extending radially inward to the alignment portion 205.

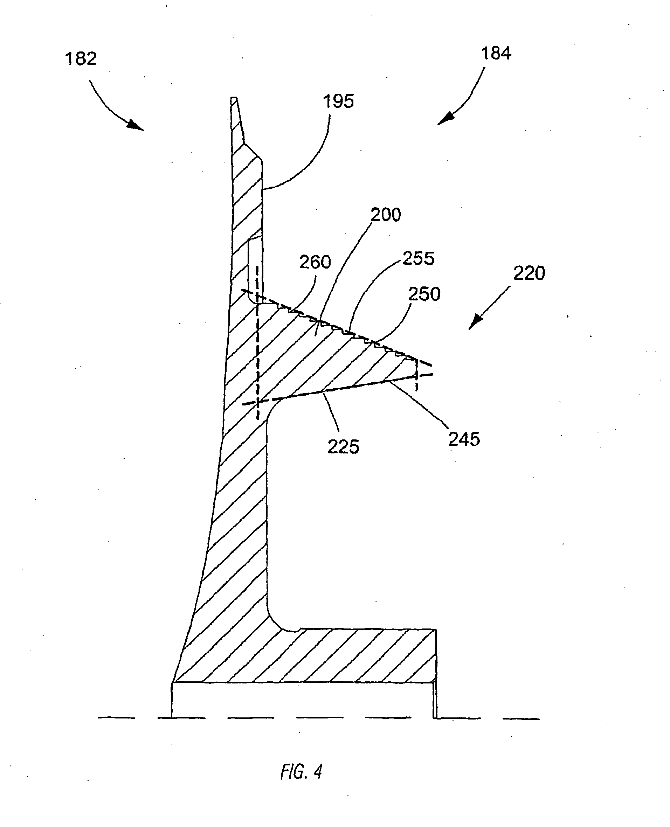

Fig. 4 illustrates the extension 200 in greater detail. An envelope 245 around the cantilevered extension 200 in a cross section that includes the axis is generally trapezoidal. In three dimensions, the outer envelope of the extension 200 includes two frustoconical surfaces, although other shapes for the extension 200 are also possible. The plurality of seal surfaces 220 of the first seal portion 215 are defined by a plurality of steps 250. Each step 250 includes a generally axially extending first portion 255 and a generally radially extending second portion 260, with the first portion 255 forming substantially a right angle with the second portion 260. As shown in Fig. 4, the first axially-extending surface 255 nearest the back side 184 has the largest diameter with each subsequent axial surface 255 reducing in diameter as they move further from the back side 184. In other words, a sequence defined by corresponding radial dimensions of the axial surfaces 255 taken in axial order, starting with the surface 255 nearest the blades 150 decreases substantially uniformly. The generally radial surfaces 260 interconnect adjacent axial surfaces 255 to complete the plurality of seal surfaces 220. In preferred constructions, the axial surfaces 255 are substantially equal in axial length and the radial change between any two adjacent axial surfaces 255 is approximately equal. In other words, the radial surfaces 260 are all substantially equal in length. In other constructions, other step patterns are employed. For example, one construction employs alternating high portions and low portions. Thus, the invention should not be limited to the illustrated pattern of seal surfaces 220 alone.

In preferred constructions, the extension 200, the balance ring 195, the alignment portion 205, and the blades 150, are integrally-formed from a single homogeneous piece of material. Of course other constructions, may attach or otherwise form the various components.

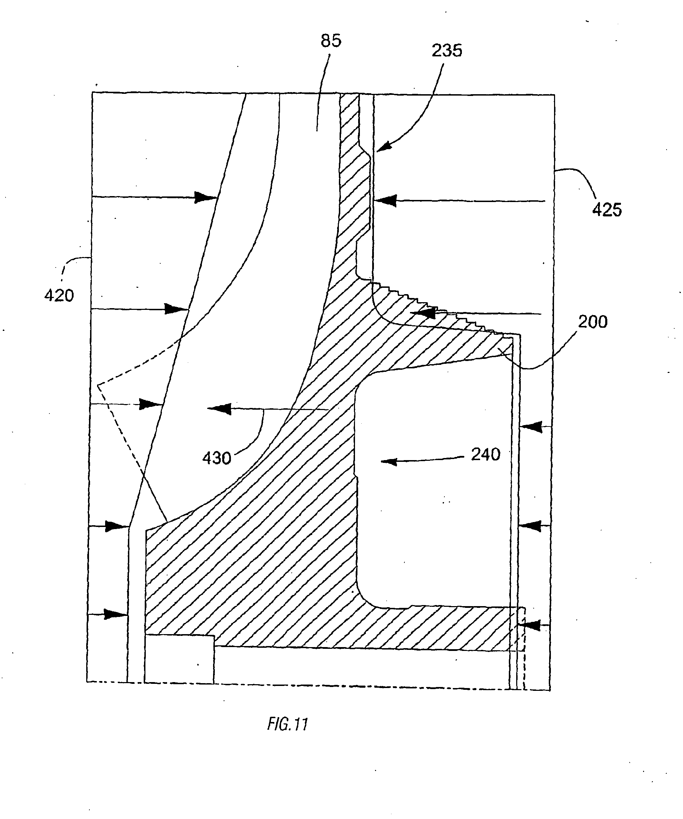

Returning to Fig. 2, the illustrated construction includes a bearing support housing 265 that attaches to the motor housing 50. The bearing support housing 265 at least partially supports the bearings 55, 60 and may also support other stationary components of the fluid compression system 10. A stationary seal ring 270 that attaches to the bearing support housing 265 includes a second seal portion 275 that is positioned adjacent the first seal portion 215 to define a seal 280. As will be discussed in greater detail with regard to Fig. 11, the seal 280 is preferably a labyrinth-type seal.

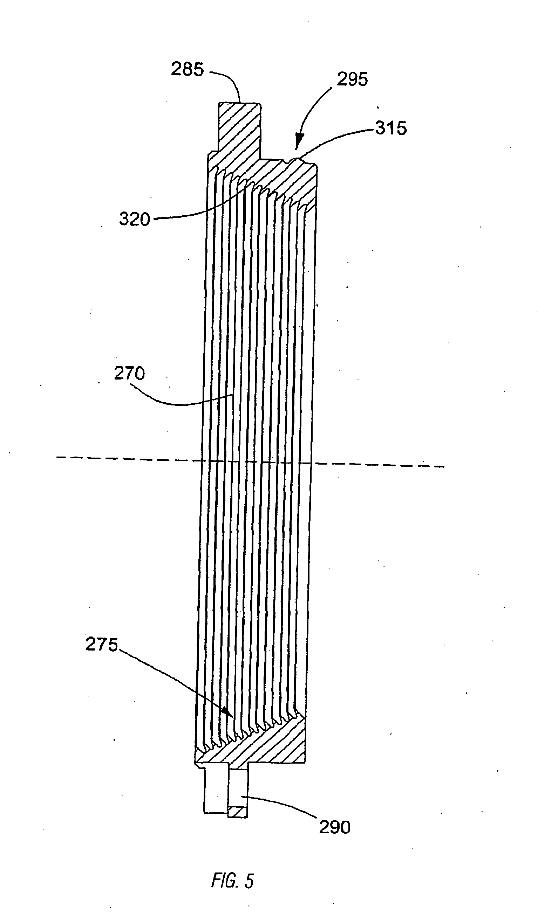

Fig. 5 illustrates the stationary seal ring 270 in greater detail than that shown in Fig. 2. The stationary seal ring 270 includes the second seal portion 275, a flange 285, a plurality of bolt holes 290, and an alignment surface 295. The flange 285 is arranged to abut against a substantially radial planar surface 298 to position the stationary seal ring 270 in the desired axial position. In preferred constructions a shim 300 (shown in Fig. 2) having a selectable or adjustable thickness is positioned between the flange 285 and the radial planar surface 298 to set the axial position of the stationary seal ring 270. Bolts 305 (shown in Fig. 2) pass through the bolt holes 290 and attach the stationary seal ring 270 to the bearing support housing 265 or other stationary component.

The alignment surface 295 fits within a bore 310 formed as part of the bearing support housing 265 and sized to receive the alignment surface 295. In preferred constructions, a slight interference or press fit is employed to assure that the stationary seal ring 270 is positioned coaxially with the bearing support housing 265. To accommodate the press fit, the alignment surface 295 may include crush features 315 such as bumps, grooves, or other features that allow for easier deformation during assembly. Once the bearing support housing 265 and the stationary seal ring 270 are coupled to one another, very little relative movement is possible. Jack bolts may be employed for disassembly. In constructions that employ jack bolts, additional threaded apertures pass through the flange 285 to allow the bolts to separate the stationary seal ring 270 and the bearing support housing 265. In other constructions, the bearing support housing 265 and the stationary seal ring 270 are formed as a single component or more than two components if desired.

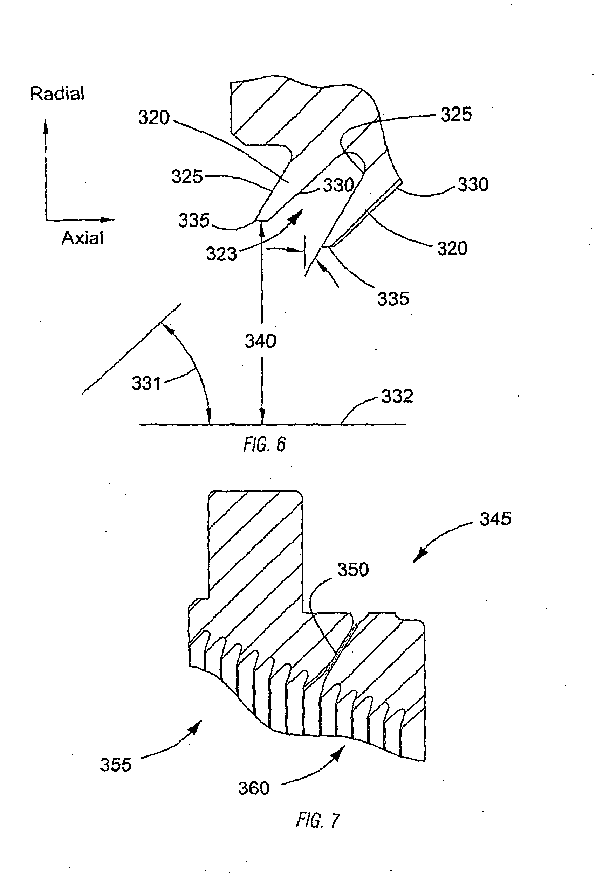

As illustrated in Fig. 5, the second seal portion 275 includes a plurality of teeth 320 that extend at least partially radially inward. Fig. 6 illustrates two of the teeth 320 and a cavity 323 therebetween in greater detail. Each tooth 320 is substantially trapezoidal in cross-section with large fillet radiuses between adjacent teeth 320 and between the teeth 320 and the remainder of the stationary seal ring 270. Each tooth 320 thus includes an upstream side 325 and a downstream side 330 that extend at least partially radially inward and terminate at a tip surface 335. In the illustrated construction, the upstream side 325 and downstream side 330 are not parallel. Specifically, each tooth 320 generally extends in a direction having both a radial component and an axial component such that each tooth defines an oblique angle 331 with respect to an axis 332. The downstream side 330 of each tooth 320 is oriented at approximately 45 degrees with respect to the axial direction and the upstream side 325 of each tooth 320 is oriented at approximately 30 degrees with respect to the radial direction. However, other constructions may employ parallel upstream sides 325 and downstream sides 330 or angles other than those illustrated herein.

The tip surface 335 extends in a substantially axial direction and defines a tip radius 340. In the illustrated construction, the tip radius 340 of the tooth 320 adjacent the impeller 85 is the largest with each adjacent tooth 320 having a tip radius 340 that is slightly smaller as the teeth 320 get further from the impeller 85. In other words, a sequence defined by corresponding radial dimensions 340 of the tip surfaces 335 in axial order, starting with a tooth 320 axially nearest the blades 150, is axially decreasing. In a preferred construction, the change in the radius 340 of each tip surface 335 is approximately equal to the change in radius of the plurality of axial step surfaces 255. In other constructions, the teeth 320 have sharp or knife edge tips, rather than the axial surface 335 illustrated herein. In still other constructions, rounded tips are employed.

Fig. 7 illustrates another construction of a stationary seal ring 345 that is similar to the stationary seal ring 270 of Fig. 5 but additionally includes a flow passage 350. The flow passage 350 divides the stationary seal ring 345 into a high-pressure portion 355 and a low-pressure portion 360 and is particularly suited for use in applications where it is desirable to isolate the fluid being compressed. A gas at a higher pressure than the expected pressure of the compressed fluid at the point of entry of the flow passage 350 can be introduced at the flow passage 350. The high-pressure gas will inhibit the flow of the compressed fluid past the flow passage 350. Rather, the introduced gas will flow through the low-pressure portion 360 of the seal ring 345. Alternatively, a low pressure can be applied at the flow passage 350 such that fluid being compressed passes through the high-pressure portion 355 and air is drawn in through the low-pressure portion 360. The air and fluid being compressed mix in the flow passage 350 and are drawn out of the system 10.

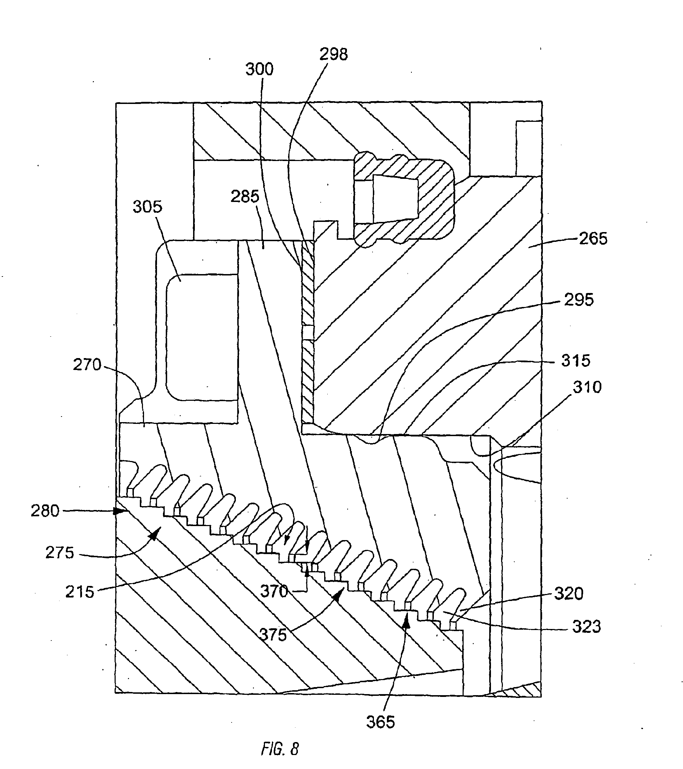

Fig. 8 illustrates the completed labyrinth seal 280 in greater detail. In the illustrated construction, each tip surface 335 aligns with one of the axial surfaces 255 to define a radial seal point 365 having a narrow gap 370 between the tip surface 335 and the axial surface 255. in addition, some constructions may position the tooth 320 adjacent the radially-extending surface 260 to define an axial seal point 375. In other constructions, other arrangements may be employed. For example, multiple teeth 320 could be positioned over common axial surfaces 255. Alternatively, straight teeth could be employed.

The labyrinth seal 280 provides for an adequate seal without undesirable contact between the rotating and the stationary components. Should such contact inadvertently occur, the relatively narrow teeth 320 provide little surface area for friction and heating. Additionally, one or both of the seal surfaces 335, 255 can be made of a resilient or abradeable material to further reduce the likelihood of damage to the impeller 85 or the stationary seal ring 270 should undesirable contact occur.

In operation, power is provided to the motor 15 to produce rotation of the shaft 40 and the impeller 85. As the impeller 85 rotates, fluid to be compressed is drawn into the intake housing 80 and into the inducer portion 155 of the impeller 85. The impeller 85 accelerates the fluid from a velocity near zero to a high velocity at the exducer portion 160. In addition, the impeller 85 produces an increase in pressure between the inducer 155 and the exducer 160.

After passing through the impeller 85, the fluid enters the diffuser 90. The diffuser 90 acts on the fluid to reduce the velocity. The velocity reduction converts the dynamic energy of the flow of fluid into potential energy or high pressure. The now high-pressure fluid exits the diffuser 90 and inters the volute 95 via the inlet channel 110. The high-pressure fluid then passes into the collecting channel 115 which collects fluid from any angular position around the inlet channel 110. The collecting channel 115 then directs the high-pressure fluid out of the volute 95 via the discharge channel 125. Once discharged from the volute 95, the fluid can be passed to several different components, including but not limited to a drying system, an interstage heat exchanger, another compressor, a storage tank, a user, an air use system, etc.

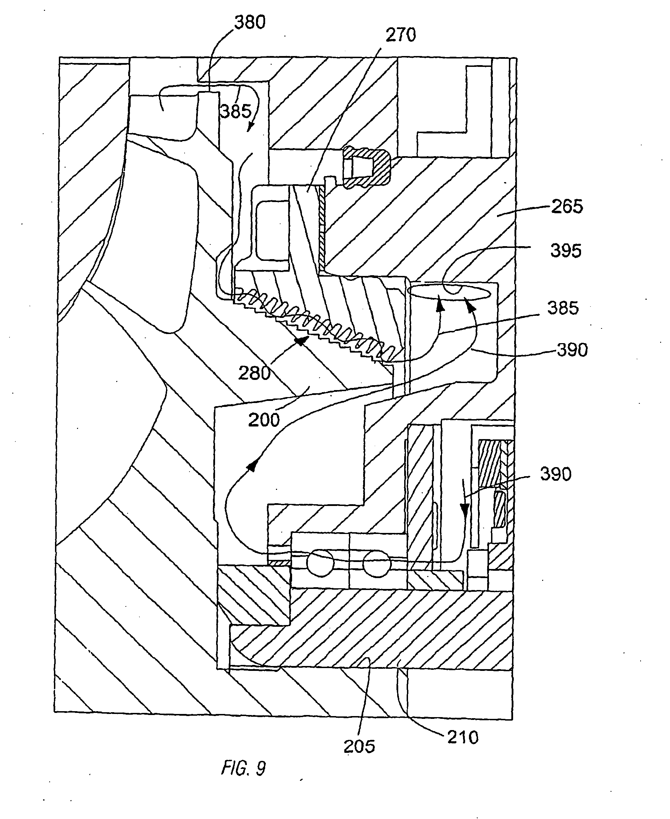

With reference to Fig. 9, it can be seen that a space 380 is provided between the rotating impeller 85 and the stationary diffuser 90. While it is desirable to make this space 380 small, it is inevitable that some compressed fluid will leak around the impeller 85, through this space 380, and to the back side 184 of the impeller 85. This high-pressure leakage flow 385 passes radially inward until it reaches the labyrinth seal 280. To pass through the labyrinth seal 280, the leakage flow must pass between each tip surface 335 and the radial and axial surfaces 255, 260 adjacent the tooth 320. The flow 385 first must accelerate to pass through the narrow gap 370 or openings defined between the tooth 320 and the respective radial and axial surfaces 255, 260. After passing through these narrow gaps 370, the flow 385 is exposed to the relatively large cavity 323 between the adjacent teeth 320 and rapidly expands to fill the cavity 323. The expansion is inefficient and produces a series of eddies and flow vortices that slightly reduce the pressure of the fluid. In addition, the rotation of the impeller 85 tends to force the fluid radially outward into the bottom of the cavity 323 and away from the next seal opening 370 that is disposed radially inward of the prior seal opening 370. This process continues as the flow 385 passes each tooth 320 until the flow 385 finally exits the labyrinth seal 280 at a pressure that is only slightly greater than atmospheric pressure (or the ambient pressure of the compression system 10).

A flow of cooling air 390 passes through the motor 15 and the bearings 55, 60 and enters the space between the impeller 85 and the bearing support housing 265. The cooling air 390 is also at a pressure slightly above atmospheric pressure (or ambient pressure) and preferably at a pressure slightly above the pressure of the leakage flow 385 exiting the labyrinth seal 280. The two flows 385, 390 mix and exit the system via a vent 395 formed in the housing 50. By maintaining the cooling air 390 at a pressure slightly higher than the leakage flow 385, the system 10 inhibits the unwanted flow 385 of hot leakage flow into the motor 15. In addition, the clearance space between the impeller 85 and the bearing support housing 265 is maintained at a small value to further inhibit the passage of hot leakage flow 385 into the bearings 55, 60 and the motor 15.

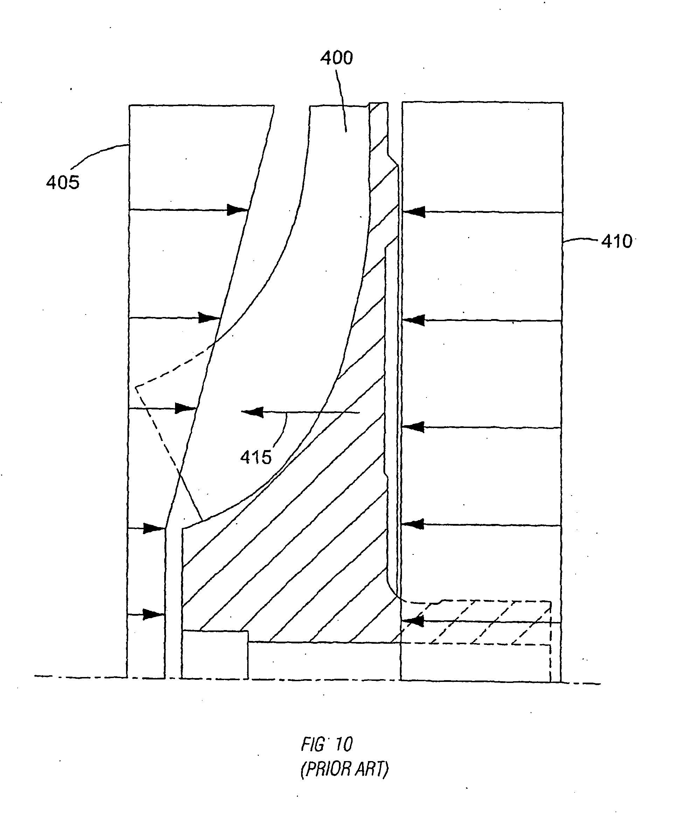

The positioning of the extension 200 also aids in balancing the thrust load produced by the impeller 85 during operation. Fig. 10 illustrates a prior art impeller 400 that includes a standard seal arrangement on the shaft. Shaft seals are generally employed as the flow area at the shaft for a given radial clearance is smaller than the flow area for the same radial clearance at a larger diameter. During operation, the innermost leading edge of the impeller 400 is exposed to a pressure that is slightly above the intake pressure of the impeller 400. The pressure increases in a substantially linear fashion as the flow moves along the impeller. At the exit of the impeller (exducer) the pressure is at its highest level (prior to passage through the diffuser and the volute). Thus, the front portion of the impeller 400 is exposed to a pressure gradient 405 that increases with the radial distance from the axis of rotation.

A portion of the high-pressure fluid exiting the impeller 400 flows around the outer diameter of the impeller 400 to the back portion. There is no mechanism, other than the shaft seals on the back portion of the prior art impeller 400 to reduce the pressure of the leakage flow. As such, the entire back portion is exposed to the high-pressure fluid. Thus, the back face is subjected to a substantially uniform pressure gradient 410 across the entire area. This results in a net thrust force toward the inlet as indicated by arrow 415.

Turning to Fig. 11, the present impeller 85 is illustrated for comparison. The pressure and the pressure gradient 420 applied to the front side 182 of the impeller 85 is substantially the same as that of the prior art impeller 400 of Fig. 10. However, the position of the extension 200 produces a different pressure gradient 425 on the back side 184. As can be seen, the high-pressure leakage is applied only to the first annular portion 235 disposed radially outside of the extension 200. The pressure level is reduced as the flow passes through the labyrinth seal 280 such that a much lower pressure (nearly atmospheric or ambient) is applied to the remainder of the back side 184 of the impeller 85. While the net axial thrust, as indicated by arrow 430, is still toward the inducer 155, the magnitude of the thrust is greatly reduced. The reduced thrust allows for the use of a smaller thrust bearing that consumes less power and is less susceptible to excessive heating.

While the illustrated construction employs an extension 200 positioned to maintain the direction of the net axial thrust as illustrated in Figs. 10 and 11, it should be readily apparent that the position of the extension 200 could be changed to adjust, and potentially reverse the thrust load if desired.

It should be noted that other arrangements of the compression system 10 may be exposed or operated in pressure regimes other than atmospheric. For example, multi-stage compression systems may employ stages in which the outlet of the labyrinth seal 280 is at a pressure that is much greater than atmospheric pressure. As such, the invention should not be limited to the pressure values disclosed herein.

Thus, the invention provides, among other things, a compressor system 10 that includes an impeller 85 and a stationary seal ring 270 that define a seal system arranged to improve the performance of the compression system 10. Various features and advantages of the invention are set forth in the following claims.

## Claims

1. A centrifugal compressor (20) comprising:
an impeller (85) defining an outside diameter and rotatable about an axis to provide a flow of compressed fluid, a portion of the compressed fluid passing around the outside diameter to define a leakage flow;
an extension (200) extending from the impeller (85) including a first seal portion (215); and
a stationary seal ring (270) including a second seal portion (275),
**characterised in that** the first seal portion (215) has a plurality of steps (250) in a leakage flow direction, the first of the plurality of steps (250) having a first diameter with the diameter of each subsequent step being smaller than an adjacent upstream step; and
the second seal portion (275) has a plurality of teeth (320), each tooth (320) disposed adjacent one of the plurality of steps (250) to define a plurality of seal points that inhibit the passage of the leakage flow.

2. The centrifugal compressor (20) of claim 1, wherein the number of steps (250) substantially equals the number of teeth (320).

3. The centrifugal compressor (20) of any preceding claim, wherein each tooth (320) has a tip (335) that defines a tip diameter and wherein the tip diameters of the teeth (320) are reduced in the leakage flow direction such that each tooth tip (335) cooperates with an adjacent step (250) to define a substantially uniform gap.

4. The centrifugal compressor (20) of any preceding claim, wherein each step (250) includes a generally radially-extending first portion (260) and a generally axially-extending second portion (255).

5. The centrifugal compressor (20) of any preceding claim, wherein each tooth (320) extends from the stationary seal ring (270) in a direction having both an axial component and a radial component.

6. The centrifugal compressor (20) of any preceding claim, wherein the plurality of steps (250) and the plurality of teeth (320) cooperate to define an average seal diameter that is greater than or equal to about 50 percent of the outside diameter.

## Patentansprüche

1. Radialverdichter (20), umfassend:
ein Laufrad (85), das einen Außendurchmesser definiert und um eine Achse drehbar ist, um eine Strömung von Druckflüssigkeit bereitzustellen, wobei ein Teil der Druckflüssigkeit um den Außendurchmesser herum fließt, um eine Leckageströmung zu definieren;
eine Erweiterung (200), die sich vom Laufrad (85) aus erstreckt und einen ersten Dichtungsabschnitt (215) einschließt; und
einen unbeweglichen Dichtungsring (270), der einen zweiten Dichtungsabschnitt (275) einschließt,
**dadurch gekennzeichnet, dass** der erste Dichtungsabschnitt (215) eine Mehrzahl von Stufen (250) in einer Leckageströmungsrichtung hat, wobei die erste der Mehrzahl von Stufen (250) einen ersten Durchmesser hat, wobei der Durchmesser jeder nachfolgenden Stufe kleiner ist, als eine angrenzende Aufwärtsstufe; und
der zweite Dichtungsabschnitt (275) eine Mehrzahl von Zähnen (320) hat, wobei jeder Zahn (320) angrenzend an eine der Mehrzahl von Stufen (250) angebracht ist, um eine Mehrzahl von Dichtungspunkten, die den Durchfluss von Leckageströmung verhindern, zu definierten.

2. Radialverdichter (20) nach Anspruch 1, wobei die Anzahl von Stufen (250) im Wesentlichen der Anzahl von Zähnen (320) entspricht.

3. Radialverdichter (20) nach einem der vorangehenden Ansprüche, wobei jeder Zahn (320) eine Spitze (335) hat, die einen Spitzendurchmesser definiert und wobei die Spitzendurchmesser der Zähne (320) in der Leckageströmungsrichtung verkleinert sind, so dass jede Zahnspitze (335) mit einer angrenzenden Stufe (250) kooperiert, um einen im Wesentlichen gleichmäßigen Zwischenraum zu definieren.

4. Radialverdichter (20) nach einem der vorangehenden Ansprüche, wobei jede Stufe (250) einen sich im Allgemeinen radial erstreckenden ersten Abschnitt (260) und einen sich im Allgemeinen axial erstreckenden zweiten Abschnitt (255) einschließt.

5. Radialverdichter (20) nach einem der vorangehenden Ansprüche, wobei sich jeder Zahn (320) vom unbeweglichen Dichtungsring (270) aus in eine Richtung erstreckt, die sowohl eine axiale Komponente als auch eine radiale Komponente hat.

6. Radialverdichter (20) nach einem der vorangehenden Absprüche, wobei die Mehrzahl von Stufen (250) und die Mehrzahl von Zähnen (320) kooperieren, um einen durchschnittlichen Dichtungsdurchmesser zu definieren, der größer ist als oder gleich etwa 50 Prozent des Außendurchmessers ist.

## Revendications

1. Compresseur centrifuge (20), comprenant:
un impulseur (85), définissant un diamètre extérieur et pouvant tourner autour d'un axe pour fournir un flux de fluide comprimé, une partie du fluide comprimé passant autour du diamètre extérieur pour définir un flux de fuite,
une extension (200), s'étendant depuis l'aube (85) incluant une première partie de joint (215); et
un anneau d'étanchéité stationnaire (270) incluant une deuxième partie de joint (275),
**caractérisé en ce que** la première partie de joint (215) a une pluralité de pas (250) dans une direction du flux de fuite, le premier de la pluralité de pas (250) ayant un premier diamètre, le diamètre de chaque pas subséquent étant plus petit qu'un pas en amont adjacent; et
la deuxième partie de joint (275) ayant une pluralité de dents (320), chaque dent (320) étant disposée à proximité de l'un de la pluralité de pas (250) pour définir une pluralité de points de joint qui inhibent le passage du flux de fuite.

2. Compresseur centrifuge (20) selon la revendication 1, dans lequel le nombre de pas (250) est substantiellement égal au nombre de dents (320).

3. Compresseur centrifuge (20) selon l'une quelconque des revendications précédentes, dans lequel chaque dent (320) a une pointe (335) qui définit un diamètre de pointe et dans lequel les diamètres de pointe des dents (320) sont réduits dans la direction du flux de fuite de sorte que chaque pointe de dent (335) coopère avec un pas adjacent (250) pour définir un trou substantiellement uniforme.

4. Compresseur centrifuge (20) selon l'une quelconque des revendications précédentes, dans lequel chaque dent (250) inclut une première partie généralement à extension radiale (260) et une deuxième partie généralement à extension radiale (255).

5. Compresseur centrifuge (20) selon l'une quelconque des revendications précédentes, dans lequel chaque dent (320) s'étend depuis l'anneau d'étanchéité stationnaire (270) dans une direction ayant à la fois un composant axial et un composant radial.

6. Compresseur centrifuge (20) selon l'une quelconque des revendications précédentes, dans lequel la pluralité de pas (250) et la pluralité de dents (320) coopèrent pour définir un diamètre de joint moyen qui est supérieur ou égal à environ 50% du diamètre extérieur.
